# EUROPEAN PATENT APPLICATION

(11) **EP 0 619 072 A1**
(43) Date of publication of application: **12.10.1994**
(21) Application number: 94302433.1
(22) Date of filing: 06.04.1994
(51) Int. Cl.: A01K 97/12

(54) **Bite indicator**

(30) Priority: 07.04.1993 GB 9307310
(71) Applicant: KEVIN NASH TACKLE LIMITED, Brooke Industrial Estate, Rayleigh, Essex (GB)
(72) Inventor: Nash, Kevin Robert, Great Baddow, Chelmsford (GB)
(74) Representative: Messulam, Alec Moses

(57) **Abstract**

A bite indicator is described comprising a body (10) to be mounted on a fishing rod support, a rigid arm (24) pivotably mounted relative to the body (10) and releasably connectable at point spaced from the pivot axis to the line of a fishing rod resting on the support, and means (26) for resiliently applying an adjustable torque to the arm (24) to enable an adjustable force to be applied by the arm to the fishing line. The means for resiliently applying an adjustable torque to the arm (24) comprises a torsion spring (26) having one end (32) anchored relative to the body and the other end (28) acting on the pivotable arm, the point of anchorage of the spring to the body being adjustable to vary the tension in the spring (26) and thereby vary the torque applied to the arm (24) by the spring (26).

## Description

### Field of the invention

The present invention relates to a bite indicator.

### Background of the invention

It is known to suspend a weight from the line of a fishing rod, the weight being placed between the tip of the rod and the reel about which the line is wound. This weight acts to tension the line and movement of this weight also provides a first indication that a fish has take the bait at the end of the line.

Because such a weight can swing in the wind, it is also known to replace it by a device commonly referred to as a monkey. A monkey comprises of a weight that is guided to slide up and down a vertical pole and though it is not affected by wind, it suffers from the disadvantage of relatively high friction.

As an alternative to a monkey, there has been used a tensioning arm pivotably mounted on the rod support and carrying weights that can slide along the arm to vary the line tension. Known devices permit a maximum force of typically 25 gm to be applied to the line but this is not sufficient on certain occasions, notably when a heavy lead is placed on the line near the bait and the bait is cast a long distance away from the angler. Such a situation can call for a tensioner able to apply a downward force on the line of as much as 200 gm and the bulk of a device with this number of weights on it would not be acceptable.

GB-A-2 260 676 describes a bite indicator which is mounted on the rod support and has a flexible spring arm attached by a releasable clip to the line of the fishing rod. It is difficult with such a construction to adjust the line tension within a wide range. Furthermore, there is a minimum tension applied to the line by the line clip which can in some cases be excessive.

GB-A-2 080 081 and US-A-4 471 555 describe bite indicators that are mounted on the rods. Because the indicators on mounted on the rods, they move with the fishing line and they need not be releasable from the line. Rod mounted indicators are however undesirable in that they are cumbersome and they affect the handling of the rods. They are also difficult to transfer from one rod to another.

GB-A-2 052 933 and GB-A-1 168 142 show indicators that bias the line upwards rather downwards and are mounted forward of the tip of the fishing rod. Such indicators do not interfere with the raising of the rod off its support when a bite is detected but they are undesirable because they are prone to false alarms. In windy conditions, the tip of the rod and the line itself can move extensively. A further disadvantage of such an indicator is that in certain situations, for example when fishing from a canal path, one is obliged to extend the tip of the rod over the water, making it impossible to position place the bite indicator in the ground near the rod tip.

### Object of the invention

The present invention seeks to provide a compact and easily adjustable device for setting the tension in a fishing line, to provide a bite indicator capable of use in a wide variety of situations.

### Summary of the invention

According to the present invention, a bite indicator comprises a body to be mounted on a fishing rod support, a rigid arm pivotably mounted relative to the body and releasably connectable at point spaced from the pivot axis to the line of a fishing rod resting on the support, and means for resiliently applying an adjustable torque to the arm to enable an adjustable force to be applied by the arm to the fishing line, the means for resiliently applying an adjustable torque to the arm comprises a torsion spring having one end anchored relative to the body and the other end acting on the pivotable arm, the point of anchorage of the spring to the body being adjustable to vary the tension in the spring and thereby vary the torque applied to the arm by the spring.

Preferably, the arm is connected to a rotor rotatably mounted within the body, a control knob is mounted on the body for rotation about the same axis as the rotor relative to the body, the coil spring acting between the control knob and the rotor so that rotation of the control knob serves to vary the tension in the coil spring, a releasable ratchet mechanism being provided between the control knob and the body to resist rotation of the control knob under the reaction of the coil spring.

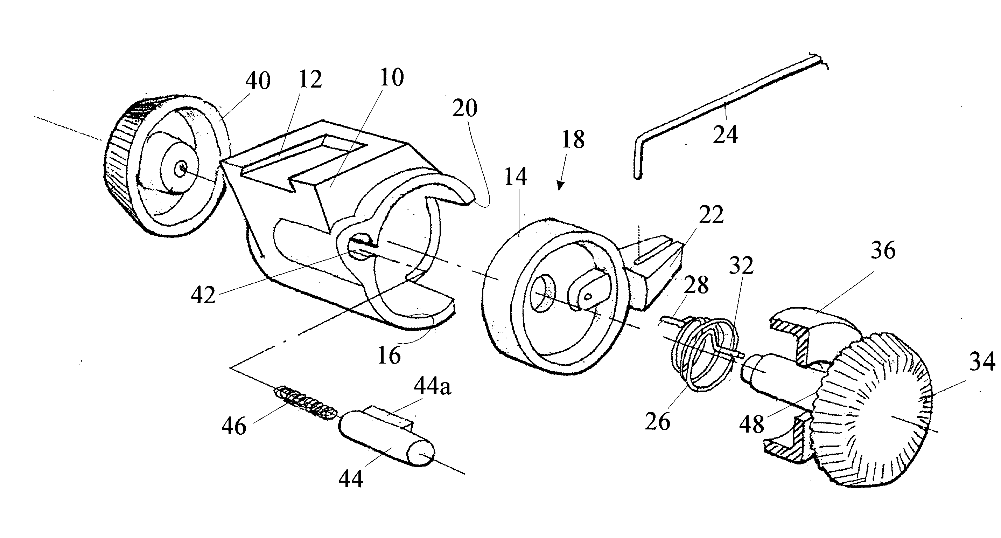

### Brief description of the drawing

The invention will now be described further, by way of example, with reference to the accompanying drawing, which is an exploded perspective view of a bite indicator of the present invention.

### Detailed description of the preferred embodiment

The illustrated bite indicator comprises a body 10 that has on its top surface a dovetailed recess 12. The recess 12, in use, is pushed onto a dovetail on a bracket mounted on a rod support (not shown) so that the body 10 is held beneath a fishing rod resting on the rod support.

The body 10 has a cylindrical compartment 16 that receives a drum 14 of a rotor 18. A socket 22 for receiving the end of an arm 24 projects radially from the drum through a cut-out 20 in the side wall of the cylindrical compartment 16. A coil spring 26 is received within the drum 14 and has one end 28 inserted in a hole 30 in the rotor 18 and its other end passing through the centre of an annular retention cap 36 into another hole on the inner face of a control knob 34.

The control knob 34 has an integral shaft 38 that passes axially through the spring 26, and holes in the rotor 18 and the body 10, a second control knob 40 being secured to the end of the shaft 38 projecting from the other side of the body 10. The second control knob 40 makes it easier for the bite indicator to be used by both right handed and left handed anglers. Furthermore, with the control knobs 34 and 40 located at the opposite ends of the shaft 38, the entire bite indicator is held firm in its assembled condition. The body 10 also has a blind hole 42 in which there is received a spring 46 and a pin 44 having a projection 44a that acts as a pawl for ratchet teeth 48 formed on the side of the control knob 34 facing the body 10.

In use, the end of the arm 24 is releasably connected at its end to the line of a fishing rod resting on the rod support on which the body 10 is mounted. The arm 24 applies a downward force to the line to tension the line and the magnitude of the force can be varied by turning the control knob 34. As the control knob is turned, it winds the coil spring 26 which in turn modifies the torque applied to the rotor 18 to which the arm 24 is fixed. The control knob 34 also experiences a reaction torque from the spring 26 but it is prevented from turning by the pawl and ratchet 44a, 48. To release the tension in the spring 26, the pin 44 is depressed against the action of the spring 46 and this disengages the pawl 44a from the ratchet teeth 48 and allows the control knob to rotate under the action coil spring 26.

The bite indicator of the invention allows the effective downward force on the line to be varied between wide limits simply by turning the control knob 34. This is a simple operation that can be carried out with one hand and the inconvenience of positioning different weights along the length of the arm 24 is obviated.

It is possible to use a reversible pawl and ratchet to allow the force exerted by the arm 24 to be zero or even an upwards force. On occasions, the weight of the line clip may exceed the desired line tension and the ability to set even an upwards force means that one can compensate for the weight of the line clip and set line tension near zero.

The line clip between the arm 24 and the line should be designed to release automatically when the rod is raised from the support and to minimise the friction with the line. A suitable construction of this line clip is described in British Patent Application No. 9307309.6. As soon as the bait on the line is taken by a fish, the arm 24 twitches and signals to the angler to strike. It is also common to use this form of bite indicator with a line movement sensor placed between the rod support and the fishing rod which may provide a supplementary bite indication.

## Claims

1. A bite indicator comprising a body (10) to be mounted on a fishing rod support, a rigid arm (24) pivotably mounted relative to the body (10) and releasably connectable at point spaced from the pivot axis to the line of a fishing rod resting on the support, and means (26) for resiliently applying an adjustable torque to the arm (24) to enable an adjustable force to be applied by the arm to the fishing line, characterised in that the means for resiliently applying an adjustable torque to the arm (24) comprises a torsion spring (26) having one end (32) anchored relative to the body and the other end (28) acting on the pivotable arm, the point of anchorage of the spring to the body being adjustable to vary the tension in the spring (26) and thereby vary the torque applied to the arm (24) by the spring (26).

2. A bite indicator as claimed in claim 1, wherein the arm (24) is connected to a rotor (18) rotatably mounted within the body (10) and a control knob (34) is mounted on the body (10) for rotation about the same axis as the rotor (18) relative to the body (10), the torsion spring acting between the control knob (34) and the rotor (18) so that rotation of the control knob serves to vary the tension in the coil spring (26), and a releasable ratchet mechanism (44,46,48) being provided between the control knob (34) and the body (10) to resist rotation of the control knob (34) under the reaction of the coil spring (26).

3. A bite indicator as claimed in claim 3, wherein the ratchet mechanism is reversible.
